# EUROPÄISCHE PATENTSCHRIFT

(11) **EP 3 932 162 B1**
(45) Veröffentlichungstag und Bekanntmachung des Hinweises auf die Patenterteilung: **19.02.2025**
(21) Anmeldenummer: 21176207.5
(22) Anmeldetag: 27.05.2021
(51) Int. Cl.: A01B 69/00

(54) **SYSTEM ZUR BESTIMMUNG DER POSITION EINER KAMERA EINER KAMERAANORDNUNG BEZÜGLICH EINER BODENEBENE**
SYSTEM FOR DETERMINING THE POSITION OF A CAMERA OF A CAMERA ASSEMBLY RELATIVE TO A GROUND PLANE
SYSTÈME DE DÉTERMINATION DE LA POSITION D'UNE CAMÉRA DANS UN DISPOSITIF CAMÉRA PAR RAPPORT À UN NIVEAU DE PLANCHER

(30) Priorität: 02.07.2020 DE 102020117477
(43) Veröffentlichungstag der Anmeldung: 05.01.2022
(73) Patentinhaber: CLAAS E-Systems GmbH, 49201 Dissen (DE)
(72) Erfinder: Jensen, Martin Falk, 2500 Valby (DK); Jürschik, Peter, 33335 Gütersloh (DE); Laysgaard Andersen, Gert, 3450 Alleroed (DK); Burchardi, Henrik, 3230 Graested (DK); Vilander, Jesper, 3480 F Fredensborg (DK); Künnen, Tobias, 49477 Ibbenbüren (DE)
(74) Vertreter: CLAAS 365FarmNet GmbH

(56) Entgegenhaltungen:
- EP-A1- 3 171 241
- DE-A1- 102016 216 515
- DE-A1- 102017 113 726
- US-A1- 2015 354 943
- US-A1- 2019 128 690

## Beschreibung

Die vorliegende Erfindung betrifft ein System zur Bestimmung der Position zumindest einer Kamera einer Kameraanordnung bezüglich einer Bodenebene gemäß dem Oberbegriff des Anspruches 1. Weiterhin betrifft die Erfindung ein Verfahren zur Bestimmung der Position zumindest einer Kamera einer Kameraanordnung bezüglich einer Bodenebene gemäß dem Oberbegriff des Anspruches 11.

Im Rahmen der zunehmenden Automatisierung landwirtschaftlicher Arbeitsmaschinen werden diese inzwischen häufig mit Kameraanordnungen und anderen Sensoranordnungen ausgestattet, um den Bediener beim Fahren und bei der Verrichtung landwirtschaftlicher Arbeit zu unterstützen. Insbesondere können landwirtschaftliche Arbeitsaggregate der landwirtschaftlichen Arbeitsmaschine, d. h. Komponenten und Geräte, insbesondere Anbaugeräte, die zur Verrichtung oder Unterstützung landwirtschaftlicher Arbeit dienen, auf diese Weise überwacht und gesteuert werden. Eine solche Kameraanordnung umfasst zumindest eine Kamera, die an einem stangenförmigen Befestigungselement höhenverstellbar angeordnet ist. Zudem ist die Kamera um eine zum Befestigungselement orthogonale Schwenkachse schwenkbar. Eine solche Kameraanordnung ist aus der DE 10 2017 113 726 A1 bekannt. Durch die Kamera der Kameraanordnung wird ein Feldbestand in Fahrtrichtung der Arbeitsmaschine abgetastet und es werden Informationen über die Breite, Höhe und Tiefe von Objekten sowie zwischen Objekten generiert. Für eine präzise Steuerung ist eine möglichst genaue Erfassung von Pflanzenreihen, dem Abstand zwischen den Pflanzenreihen sowie die Unterscheidung zwischen Nutzpflanzen und Wildkräutern (Schadpflanzen) erforderlich, insbesondere, wenn diese annähernd die gleiche Wuchshöhe aufweisen. Um die Genauigkeit der Erfassung zu optimieren bzw. zu maximieren, muss die Position der Kamera einerseits ausreichend nah an der Nutzpflanze sein, andererseits sollen möglichst viele Pflanzen und Pflanzenreihen durch die Kamera erfasst werden, um die einzelnen Pflanzenreihen trotz eventueller Fehlstellen robust erkennen zu können. Maßgeblich ist hierfür insbesondere die Montagehöhe der Kamera an dem sich vertikal zur Bodenebene erstreckenden Befestigungselement. Eine falsch gewählte Montagehöhe bzw. ein Nichtanpassen der Höhe der Kamera aufgrund von sich ändernden Arbeitsbedingungen, z.B. beim Wechseln eines Schlages, Wuchshöhe oder dergleichen, führen dazu, dass die erforderliche Genauigkeit der Erfassung durch die Kameraanordnung nicht gegeben ist. Die genaue bzw. angepasste Einstellung des Kamerawinkels, d.h. der Neigungswinkel der Blickachse eines Objektives der Kamera, beeinflusst ebenfalls die Genauigkeit der Erfassung. Weitere Systeme zur Bestimmung der Kameraposition sind aus den folgenden Publikationen bekannt: EP 3 171 241 A1, US 2019/128690 A1, US 2015/354943 A1 oder DE 10 2016 216515 A1.

Somit liegt der vorliegenden Erfindung die Aufgabe zugrunde, ein System zur Bestimmung der Position, d.h. von Höhe und Winkel, einer höhenverstellbaren Kamera einer Kameraanordnung bezüglich einer Bodenebene bereitstellen, welches eine an die jeweiligen Arbeitsbedingungen angepasste Einstellung der Position der Kamera ermöglicht. Die vorstehende Aufgabe wird bei einer Anordnung eines Kamerasystems an einem landwirtschaftlichen Arbeitsaggregat gemäß dem Oberbegriff von Anspruch 1 durch die Merkmale des kennzeichnenden Teils von Anspruch 1 gelöst. Weiterhin wird die Aufgabe durch ein Verfahren zur Bestimmung der Position einer höhenverstellbaren Kamera einer Kameraanordnung bezüglich einer Bodenebene gemäß dem Oberbegriff von Anspruch 11 durch die Merkmale des kennzeichnenden Teils von Anspruch 11 gelöst.

Gemäß dem Anspruch 1 wird ein System zur Bestimmung der Position zumindest einer Kamera einer Kameraanordnung bezüglich einer Bodenebene vorgeschlagen, die an einer landwirtschaftlichen Arbeitsmaschine oder einem landwirtschaftlichen Arbeitsaggregat angeordnet ist, wobei das Arbeitsaggregat als Anbaugerät der Arbeitsmaschine zur Bearbeitung eines Feldbestands ausgeführt ist, wobei die Kameraanordnung konfiguriert ist, mittels der zumindest einen Kamera Informationen über den Feldbestand zu generieren. Erfindungsgemäß ist vorgesehen, dass die Kameraanordnung dazu eingerichtet ist, mittels eines Sensors Sensordaten einer Oberfläche bereitzustellen, die Sensordaten mittels einer Recheneinheit zur Bestimmung der Bodenebene auszuwerten und anhand der ausgewerteten Sensordaten die durch Höhe und/oder Winkel der Kamera bestimmte aktuelle Position in Bezug auf die Bodenebene zu bestimmen. Die Kameraanordnung kann auch zwei oder mehr Kameras umfassen, die entsprechend in ihrer Position anpassbar sind, um auf Änderungen, wie beispielsweise unterschiedliche Nutzpflanzenarten oder Fruchtarten bei einem Schlagwechsel, reagieren zu können.

Bevorzugt kann der Sensor die zumindest eine Kamera der Kameraanordnung sein. Die Verwendung der Kamera als Sensor hat den Vorteil, dass auf zusätzliche Sensoren zur Bestimmung der Höhe und/oder des Winkels verzichtet werden kann. Die Kamera übernimmt somit zwei Aufgaben, zum einen die Überwachung des Arbeitsaggregates sowie des Feldbestands und anderseits die Überwachung ihrer eigenen Position bezogen auf den zu überwachenden Feldbestand.

Insbesondere kann die zumindest eine Kamera eine 3D-Kamera sein. Mittels der mittels der 3D-Kamera sind 3D-Informationen generierbar, wobei dies Informationen über die Pflanzenhöhe der Nutzpflanzen, über den Pflanzenabstand der Nutzpflanzen quer, d.h. orthogonal, zur Fahrtrichtung, über den Pflanzenabstand der Nutzpflanzen in Fahrtrichtung und/oder über Pflanzenbestandteile der Nutzpflanzen sein können. Zusätzlich oder alternativ können diese 3D-Informationen Informationen über die Pflanzenhöhe von Schadpflanzen zwischen den Nutzpflanzen, über den Pflanzenabstand von Schadpflanzen zwischen den Nutzpflanzen quer zur Fahrtrichtung, über den Pflanzenabstand von Schadpflanzen zwischen den Nutzpflanzen in Fahrtrichtung und/oder über Pflanzenbestandteile der Schadpflanzen zwischen den Nutzpflanzen sein.

Hierbei kann die Recheneinheit dazu eingerichtet sein, eine Korrelation zwischen den bereitgestellten Sensordaten des Sensors, die eine Punktwolke bilden, und einer die Bodenebene abbildenden Ausgleichsebene zu bestimmen. Der Grad der Korrelation zwischen der Punktwolke aus Sensordaten, die von der 3D-Kamera generiert werden, und der Ausgleichsebene ist ein Maß dafür, mit welcher Genauigkeit die Lage der Bodenebene bestimmt wird, welche die Bezugsgröße für die Einstellung der Kamera ist. Dabei kann die Recheneinheit dazu eingerichtet sein, eine Ausgleichsebene innerhalb eines mathematischen Raums zu modellieren und mit der Punktwolke aus Sensordaten zu vergleichen. Die Modellierung und der Vergleich werden iterativ durchgeführt. Die Genauigkeit des Modells wird durch die Teilmenge an Sensordaten bestimmt, deren Abweichung von der modellierten Ausgleichsebene kleiner ist als ein bestimmter Grenzwert bzw. eine Fehlerschranke.

Darüber hinaus kann die Kameraanordnung dazu eingerichtet sein, Farbinformationen und/oder Strukturinformationen zu generieren, um zwischen pflanzlichem Bewuchs und der Bodenebene zu unterscheiden. Dies hat den Vorteil, dass in der Punktwolke enthaltene Punkte, die aufgrund der Analyse der Farbinformationen und/oder Strukturinformationen im Ergebnis pflanzlichen Bewuchs darstellen können, ausgefiltert werden können. Dadurch kann die Bestimmung der Lage der Bodenebene auf die Auswertung der Korrelation der Punktwolke aus Sensordaten und der modellierten Ausgleichsebene reduziert werden.

Hierzu kann die Kameraanordnung dazu eingerichtet sein, die Sensordaten auszufiltern, welche aufgrund von Farbinformationen und/oder Strukturinformationen als pflanzlicher Bewuchs oder andere Objekte bestimmt werden.

Gemäß einer bevorzugten Ausführung kann der Sensor ein Ultraschallsensor oder ein Lidar-Sensor sein. Mittels eines solchen Sensors kann die aktuelle Höhe der Kamera bezogen auf die Bodenebene detektiert werden. Die jeweilige Höhe der Kamera hat den größten Einfluss auf die Genauigkeit der Erfassung. Ein zusätzlicher Winkelsensor ermöglicht die Bestimmung des aktuellen Winkels der Kamera, um diesen ebenfalls anpassen zu können.

Insbesondere kann die Höhe der Kamera durch einen Linearaktor verstellbar sein. Der Linearantrieb kann bevorzugt als Hydraulikzylinder oder Pneumatikzylinder ausgeführt sein. Eine Ausgestaltung des Linearaktors als elektromechanischer Linearantrieb ist ebenfalls denkbar.

Dabei kann die Recheneinheit dazu eingerichtet sein, den Linearaktor zur Änderung der Position der Kamera in Abhängigkeit von der in Bezug auf die Bodenebene bestimmten Höhe anzusteuern. Die Ansteuerung kann dabei automatisiert erfolgen. Alternativ kann die Ansteuerung des Linearaktors zur Änderung der Position der Kamera einer expliziten Freigabe durch den Bediener der Arbeitsmaschine bedürfen.

Weiterhin kann die Recheneinheit dazu eingerichtet sein, in Abhängigkeit von der in Bezug auf die Bodenebene bestimmten Höhe einen Sollwert für eine einzustellende Höhe der Kamera vorzuschlagen. Hierzu kann die Recheneinheit eine Information auf einer Anzeige einer Eingabe-Ausgabe-Vorrichtung ausgeben. Die Information kann den Bediener allgemein darüber informieren, dass mit der aktuellen Höheneinstellung der Kamera eine optimale Erfassung des Feldbestandes nicht gegeben ist. Darüber hinaus kann dem Bediener ein konkreter Sollwert für eine einzustellende Höhe der Kamera vorgeschlagen werden. Neben der automatisierten Einstellung kann die Ansteuerung des Linearaktors auch durch den Bediener mittels der Eingabe-Ausgabe-Vorrichtung vorgenommen werden.

Bevorzugt kann die Recheneinheit dazu eingerichtet sein, in Abhängigkeit von dem in Bezug auf die Bodenebene bestimmten Winkel eine Winkeländerung vorzuschlagen. Hierzu kann die Recheneinheit eine Information auf der Anzeige der Eingabe-Ausgabe-Vorrichtung ausgeben. Die Information kann den Bediener allgemein darüber informieren, dass mit der aktuellen Winkeleinstellung der Kamera eine optimale Erfassung des Feldbestandes nicht gegeben ist. Darüber hinaus kann dem Bediener ein konkreter Sollwert für einen einzustellenden Winkel der Kamera vorgeschlagen werden. Die Einstellung des Winkels kann manuell durch den Bediener erfolgen. Alternativ kann ein Aktor vorgesehen sein, der automatisch ein Schwenken der Kamera bewirkt, um den Winkel der Kamera aufgrund der bestimmten Winkeländerung anzupassen.

Des Weiteren kann die Recheneinheit dazu eingerichtet sein, Abweichungen der eingestellten Position der Kamera von einer optimalen Position zur Generierung der Informationen über den Feldbestand zu signalisieren.

Insbesondere kann die Recheneinheit dazu eingerichtet sein, durch die Ausführung eines Schätzalgorithmus die Position der Kamera in Bezug auf die Bodenebene zu bestimmen. Insbesondere kann als Schätzalgorithmus der RANSAC-Algorithmus (random sample consensus- Algorithmus) oder maximum-likelihood-artige Schätzer (M-Schätzer) zur Anwendung kommen.

Die eingangs gestellte Aufgabe wird verfahrenstechnisch durch ein Verfahren gemäß dem Anspruch 11 gelöst.

Gemäß dem Anspruch 11 wird ein Verfahren zur Bestimmung der Position zumindest einer Kamera einer Kameraanordnung bezüglich einer Bodenebene, die an einer landwirtschaftlichen Arbeitsmaschine oder einem landwirtschaftlichen Arbeitsaggregat angeordnet ist, mit dem ein Feldbestand bearbeitet wird, vorgeschlagen, wobei das Arbeitsaggregat als Anbaugerät der Arbeitsmaschine ausgeführt ist, wobei mittels der zumindest einen Kamera Informationen über den Feldbestand generiert werden, wobei durch die Kameraanordnung mittels eines Sensors Sensordaten einer Oberfläche bereitgestellt werden, dass die bereitgestellten Sensordaten mittels einer Recheneinheit zur Bestimmung der Bodenebene ausgewertet werden, und dass anhand der ausgewerteten Sensordaten die durch Höhe und/oder Winkel der zumindest einen Kamera bestimmte aktuelle Position in Bezug auf die Bodenebene bestimmt werden.

Hinsichtlich der Ausgestaltungsmöglichkeiten und der Vorteile des Verfahrens wird auf die Ausführungen zum vorschlagsgemäßen System verwiesen.

Die vorliegende Erfindung wird nachstehend anhand eines in den Zeichnungen dargestellten Ausführungsbeispieles näher erläutert.

Es zeigen:
- Fig. 1: eine landwirtschaftliche Arbeitsmaschine mit einem landwirtschaftlichen Arbeitsaggregat in einer Betriebssituation;
- Fig. 2: eine Seitenansicht des landwirtschaftlichen Arbeitsaggregats der landwirtschaftlichen Arbeitsmaschine aus Fig. 1 mit aufgesetzter Kamera; und
- Fig. 3: exemplarisch ein Diagramm, welches ein Ergebnis eines Schätzalgorithmus veranschaulicht; und
- Fig. 4: ein vereinfachtes Flussdiagramm zur Erläuterung eines Verfahren zur Bestimmung der Position der Kamera gemäß Fig. 2 bezüglich einer Bodenebene.

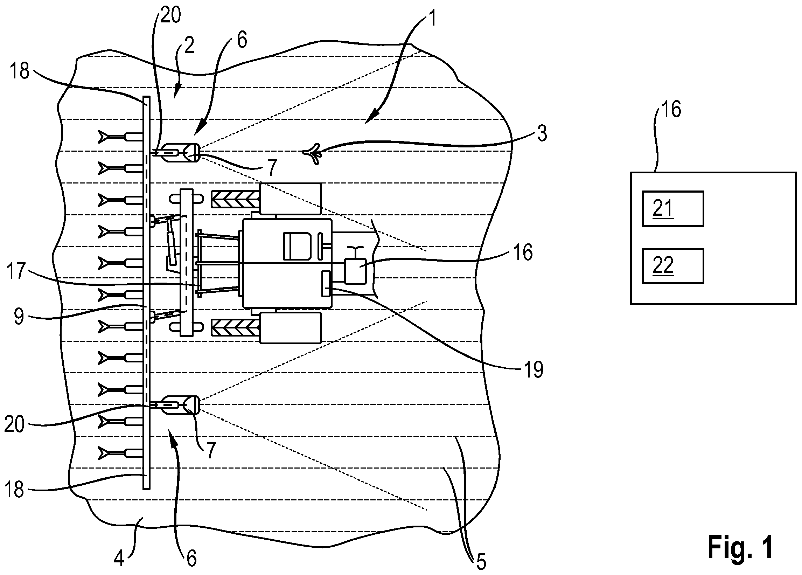

Die Darstellung in Fig. 1 zeigt eine schematische Draufsicht auf eine landwirtschaftliche Arbeitsmaschine mit einem landwirtschaftlichen Arbeitsaggregat in einer Betriebssituation. Die vorschlagsgemäße Lösung lässt sich auf einen weiten Bereich landwirtschaftlicher Arbeitsmaschinen, insbesondere selbstfahrender landwirtschaftlicher Arbeitsmaschinen, anwenden. Dazu gehören Zugmaschinen, insbesondere Traktoren, und Erntemaschinen, insbesondere Mähdrescher, Feldhäcksler oder dergleichen. Bei dem dargestellten und insoweit bevorzugten Ausführungsbeispiel handelt es sich bei der landwirtschaftlichen Arbeitsmaschine 1 um einen Traktor, der in an sich üblicher Weise mit einem landwirtschaftlichen Arbeitsaggregat 2 in Form eines Anbaugeräts ausgestattet ist. Bei dem landwirtschaftlichen Arbeitsaggregat 2 handelt es sich hier beispielsweise um eine mechanische Hacke oder um einen Grubber. Die Ausführungen zu einem Traktor bzw. zu einem solchen landwirtschaftlichen Arbeitsaggregat gelten für alle anderen Arten von landwirtschaftlichen Arbeitsmaschinen bzw. landwirtschaftlichen Arbeitsaggregaten entsprechend.

Die landwirtschaftliche Arbeitsmaschine 1 und das landwirtschaftliche Arbeitsaggregat 2 werden von einer Bedienperson, dem Fahrer, bedient, wobei als Bedienerunterstützung eine Steuereinheit 16 mit einer Recheneinheit 21 und einer Speichereinheit 22 vorgesehen ist, welches beispielsweise die Geschwindigkeit und/oder den Lenkwinkel der landwirtschaftlichen Arbeitsmaschine 1 und/oder die Arbeitshöhe des landwirtschaftlichen Arbeitsaggregats 2, insbesondere vollautomatisch, steuern kann. Die Steuerung von landwirtschaftlicher Arbeitsmaschine 1 und/oder landwirtschaftlichem Arbeitsaggregat 2 durch die Steuereinheit 16 ermöglicht eine besonders präzise Bearbeitung eines eine Vielzahl von Nutzpflanzen 3 umfassenden Feldbestandes. Beispielsweise kann mit dem hier dargestellten landwirtschaftlichen Arbeitsaggregat 2 in Form einer mechanischen Hacke oder eines Grubbers, der Boden 4 zwischen den Nutzpflanzen 3 besonders präzise und umfassend bearbeitet, beispielsweise aufgebrochen, werden, ohne die Nutzpflanzen 3 dabei zu beschädigen. Der Bereich zwischen den Nutzpflanzen 3 wird dabei besonders präzise erkannt, sogar dann, wenn dieser von unerwünschten Wildkräutern (Schadpflanzen) bewachsen ist. Insbesondere können Pflanzenreihen 5 mit mehreren Nutzpflanzen 3 besonders exakt erkannt werden. Die Steuereinheit 16 ist durch ein Kommunikationsmittel mit einer Eingabe-Ausgabe-Vorrichtung 19 der Arbeitsmaschine 1 verbunden, die eine Anzeige aufweist.

Das landwirtschaftliche Arbeitsaggregat 2 weist einen Mittenabschnitt 9 auf, mit dem das Arbeitsaggregat 2 an einer Anbauvorrichtung 17 der Arbeitsmaschine 1, wie einem Dreipunkt-Kraftheber, anbringbar ist. Weiterhin weist das landwirtschaftliche Arbeitsaggregat 2 zumindest einen in einer im Wesentlichen horizontalen Arbeitsstellung über die Breite der Arbeitsmaschine 1 hinausragenden Ausleger 18 auf, die sich beidseitig an den Mittenabschnitt 9 in dessen Längsrichtung erstreckend anschließen.

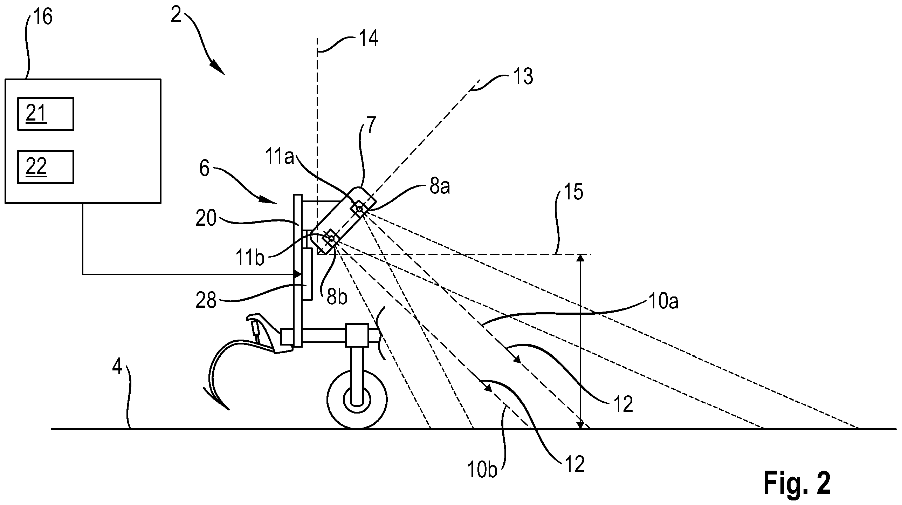

In Fig. 2 ist eine Seitenansicht des landwirtschaftlichen Arbeitsaggregats 2 aus Fig. 1 dargestellt. Die landwirtschaftliche Arbeitsmaschine 1 weist ein Kamerasystem 6 mit zumindest einer Kamera 7 auf, insbesondere mit einer 3D-Kamera, die hier und vorzugsweise eine Stereokamera mit zwei Kameraobjektiven 8a und 8b ist. Die Kamera 7 ist gemäß dem in Fig. 2 gezeigten Ausführungsbeispiel auf dem landwirtschaftlichen Arbeitsaggregat 2 montiert, kann aber grundsätzlich auch auf der Arbeitsmaschine 1 angeordnet werden, an der das Arbeitsaggregat 2 montiert ist. Die jeweilige Kamera 7 ist mittels eines Befestigungselementes 20 an dem zumindest einen Ausleger 18 angeordnet. Wie aus Fig. 1 ersichtlich ist, ist auf jedem der Ausleger 18 ein Kamerasystem 6 mit zumindest einer Kamera 7 mittels eines Befestigungselementes 20 angeordnet. Die Befestigungselemente 20 sind als starre Stangen oder Streben ausgeführt, an denen die zumindest eine Kamera 7 zumindest höhenverstellbar angeordnet ist. Zur Höhenverstellung kann ein Linearaktor 28 vorgesehen sein. Der Linearaktor 28 kann, wie beispielhaft angedeutet als Hydraulikzylinder, als Pneumatikzylinder oder als elektromechanischer Linearantrieb ausgeführt sein. In der Arbeitsstellung des Arbeitsaggregates 2 ist das jeweilige Befestigungselement 20 in vertikaler Richtung im Wesentlichen orthogonal zum Ausleger 18 ausgerichtet. Der Linearaktor 28 kann durch die Steuereinheit 16 angesteuert werden.

Das jeweilige Kamerasystem 6 ist konfiguriert, mittels der Kamera 7 den Feldbestand, d.h. die Nutzpflanzen 3 bzw. Pflanzenreihen 5 aus Nutzpflanzen 3, insbesondere in Fahrtrichtung vor dem landwirtschaftlichen Arbeitsaggregat 2, zu erfassen und entsprechende 3D-Informationen des Feldbestands zu generieren, indem mit der Kamera 7 stereoskopische Bildpaare entlang zweier verschiedener Blickachsen 10a, 10b aufgenommen werden. Die Blickachsen 10a, 10b sind hier definiert als die Achsen, die von den optischen Zentren 11a, 11b der Kamera 7 bzw. der Kameraobjektive 8a und 8b der Kamera 7 in die Blickrichtung 12 verlaufen. Wie die Darstellung nach Fig. 2 beispielhaft zeigt, ist die Blickrichtung 12 der Kamera 7 hier etwa 45° zur horizontalen Ebene 15 geneigt. Die optischen Zentren 11a, 11b der Kamera 7 sind durch eine Basislinie 13 miteinander verbunden, die bezüglich der horizontalen Ebene 15 geneigt ist, hier entsprechend ebenfalls um 45°. Die Basislinie 13 erstreckt sich, wie Fig. 2 zeigt, in einer Ebene 14, die sich orthogonal zur horizontalen Ebene 15 erstreckt.

Die Kameraanordnung 6 ist erfindungsgemäß dazu eingerichtet ist, mittels eines Sensors, hier und vorzugsweise der Kamera 7, Sensordaten einer strukturierten Oberfläche, d.h. des Feldbestands an Nutzpflanzen 3, Wildkräutern, des Bodens 4 sowie der Pflanzenreihen 5, bereitzustellen, die Sensordaten mittels der Recheneinheit 21 zur Bestimmung einer Bodenebene 25 auszuwerten und anschließend anhand der ausgewerteten Sensordaten die durch Höhe und/oder Winkel der Kamera 7 bestimmte aktuelle Position der Kamera 7 in Bezug auf die Bodenebene 18 zu bestimmen. In der Speichereinheit 22 ist eine entsprechende Software hinterlegt, die einen geeigneten Algorithmus umfasst, um die Bodenebene 25 zu bestimmen.

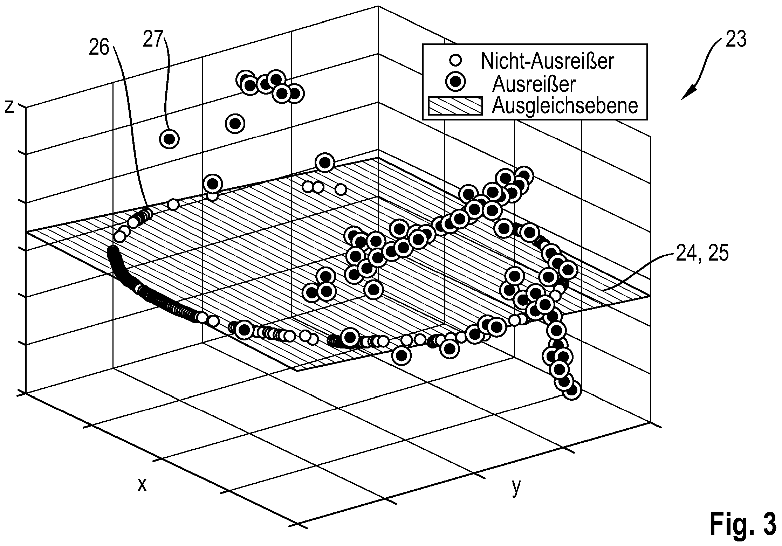

In Fig. 3 ist ein Diagramm dargestellt, welches ein Ergebnis eines Schätzalgorithmus veranschaulicht. Fig. 3 veranschaulicht einen beispielhaften mathematischen Raum 23 und einige repräsentative Punkte innerhalb des mathematischen Raums 16, die Sensordaten der Nutzpflanzen 3, des Bodens 4 sowie der Pflanzenreihen 5, die durch die zumindest eine Kamera 7 der Kameraanordnung 6 erfasst wurden, darstellen oder anderweitig davon abgeleitet sind. Mit x, y, z sind allgemein Raumkoordinaten bezeichnet. Wie in Fig. 3 gezeigt, befinden sich repräsentative Punkte 26, 27 von Sensordaten von Objekten, wie den Nutzpflanzen 3 und Schadpflanzen sowie des Bodens 4, größtenteils in einer zweidimensionalen Ausgleichsebene 24 (auch als "Ebene der besten Passung" bezeichnet) oder nahe der Ausgleichsebene 24 innerhalb einer vorbestimmten Nähe. Die vorbestimmte Nähe wird durch so genannte Fehlerschranken vorgegeben. Die repräsentativen Punkte 26, die sich in oder nahe der Ausgleichsebene 24 befinden, werden nachfolgend auch als "Nicht-Ausreißer" bezeichnet und werden durch den Schätzalgorithmus, wie beispielsweise den RANSAC-Algorithmus (random sample consensus-Algorithmus), als Sensordaten der Objekte innerhalb des von der Kamera 7 optisch erfassbaren Bereiches darstellend angesehen.

Andererseits werden andere repräsentative Punkte 27 aus Fig. 3, die weiter entfernt von der Ausgleichsebene 24 bzw. der Ebene der besten Passung sind, nachfolgend auch als "Ausreißer" bezeichnet. Die Ausreißer 27 befinden sich nicht in oder nahe der Ausgleichsebene 24, da sie, obwohl sie Sensordaten der Objekte wie den Nutzpflanzen 3 sowie des Bodens 4 oder von nicht-pflanzlichen Objekten auf dem Boden 4 darstellen, außerhalb der vorgebbaren Fehlerschranke liegen. Im Gegensatz zu den Nicht-Ausreißern 26 sind die Ausreißer 27 von der Verwendung zur Bestimmung der Bodenebene 25 ausgeschlossen.

Mittels des Schätzalgorithmus wie dem RANSAC-Algorithmus soll die Ausgleichsebene 24 bzw. Ebene der besten Passung gefunden werden, die die größte Anzahl an repräsentativen Punkten 26, 27 in Fig. 3 unterbringt. Sobald die Ausgleichsebene 24 bzw. die Ebene der besten Passung gefunden ist, werden nur die repräsentativen Punkte 26, welche die Nicht-Ausreißer 26 darstellen, in Verbindung mit der Ausgleichsebene 24 verwendet, welche die zu bestimmende Bodenebene 25 bildet, auf die bezogen die Position der Kamera 7, d.h. deren aktuelle Höhe und/oder Winkel, bestimmt wird.

Die Kameraanordnung 6 ist dazu eingerichtet, vorab die von der Kamera 7 bereitgestellten Sensordaten auszufiltern, welche aufgrund von Farbinformationen und/oder Strukturinformationen als pflanzlicher Bewuchs, d.h. Nutzpflanzen 3 und Wildkräuter (Schadpflanzen), oder andere Objekte bestimmt werden. Somit wird die Anzahl der repräsentativen Punkte 26, 27, Nicht-Ausreißer und Ausreißer, innerhalb des mathematischen Raums 23 deutlich reduziert, wie in Fig. 3 vereinfacht veranschaulicht.

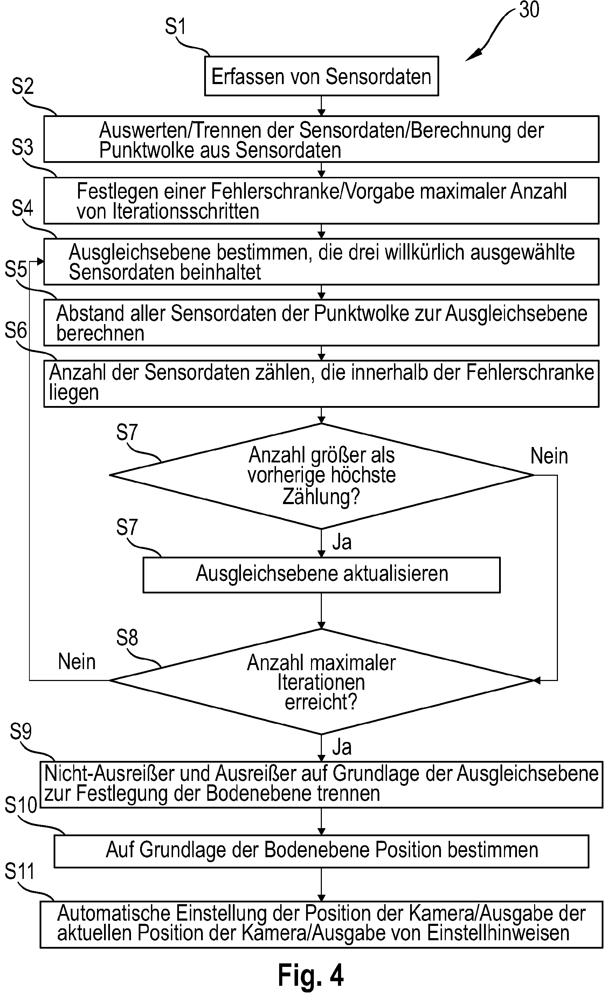

Fig. 4 zeigt eine Darstellung eines vereinfachten Flussdiagramms zur Erläuterung des erfindungsgemäßen Verfahrens zur Bestimmung der Position der Kamera 7 gemäß Fig. 2 bezüglich der Bodenebene 25 respektive des Bodens 4. Hierzu wird ein Prozess 30 initiiert, welcher zumindest die nachfolgenden Schritte S1 bis S11 umfasst.

In einem ersten Schritt S1 werden von der Kamera 7 oder einem sonstigen geeigneten Sensor, wie einem Lidar-Sensor oder einem Ultraschallsensor, Sensordaten erfasst. D.h., es wird zumindest eine Aufnahme des Bodens 4 und der darauf befindlichen Nutzpflanzen 3, Schadpflanzen oder sonstiger Objekte erstellt.

Im nachfolgenden Schritt S2 werden die Sensordaten ausgewertet, welche eine Punktwolke bilden, die sich in dem mathematischen Raum 23 befindet. Dabei können im Schritt S2 vorab bereits die Sensordaten ausgefiltert werden, welche aufgrund von Farbinformationen und/oder Strukturinformationen als pflanzlicher Bewuchs, d.h. Nutzpflanzen 3 und Wildkräuter, oder andere Objekte bestimmt werden können.

Im Schritt S3 wird eine Fehlerschranke festgelegt, welche dem nachfolgenden Algorithmus zugrunde gelegt wird. Alternativ/oder zusätzlich kann in diesem Schritt S3 die Vorgabe einer maximalen Anzahl von durchzuführenden Iterationsschritten erfolgen.

Im Schritt S4 wird erstmalig eine Ausgleichsebene 24 bestimmt, die drei willkürlich ausgewählte Sensordaten, d.h. repräsentative Punkte 26, 27, beinhaltet.

Im Schritt S5 wird der Abstand aller Sensordaten der in Schritt S2 bestimmten Punktwolke zur Ausgleichsebene 24 berechnet.

Im Schritt S5 wird dann die Anzahl der Sensordaten gezählt, die innerhalb der festgelegten Fehlerschranke liegen.

Im Schritt S6 wird überprüft, ob die Anzahl der innerhalb der Fehlerschranke liegenden Sensordaten größer als die der vorherigen höchsten Zählung ist. Bejahendenfalls wird zum Schritt S7 übergegangen, in welchem die Lage der Ausgleichsebene 24 aktualisiert wird. Verneinendenfalls wird zum Schritt S8 gesprungen, in welchem geprüft wird, ob die Anzahl maximaler Iterationen erreicht wurde.

Wurde die die Anzahl maximaler Iterationen noch nicht erreicht, so wird zum Schritt S4 zurückgesprungen.

Ist hingegen die Anzahl maximaler Iterationen erreicht, so werden im Schritt S9 Nicht-Ausreißer 26 und Ausreißer 27 auf Grundlage der bestimmten Ausgleichsebene 24 zur Festlegung der Bodenebene 25 voneinander getrennt.

Im Schritt S10 wird auf Grundlage der zuvor bestimmten Lage der Bodenebene 25 die aktuelle Position der Kamera 7, d.h. die Höhe und/oder der Winkel, bezogen auf die Bodenebene 25 bestimmt.

Im Schritt S11 kann eine automatische Einstellung der Position der Kamera 7 durch die Steuereinheit 16 bewirkt werden, wenn eine Abweichung der Position der Kamera 7 bestimmt wird, welche die Genauigkeit der Erfassung zumindest signifikant reduziert. Hierzu generiert die Steuereinheit 16 auf Grundlage der aktuell bestimmten Position der Kamera 7 ein Steuersignal, welches an den Linearaktor 28 übermittelt wird, um die Position der Kamera 7 zu korrigieren. Alternativ oder zusätzlich kann eine Ausgabe der aktuellen Position der Kamera 7 auf der Anzeige der Eingabe-Ausgabe-Vorrichtung 19 erfolgen, um den Bediener der Arbeitsmaschine auf die inkorrekte Position der Kamera 7 hinzuweisen. Zudem kann die Ausgabe von Einstellhinweisen auf der Anzeige der Eingabe-Ausgabe-Vorrichtung 19 erfolgen, um den Bediener anzuleiten, wenn die Einstellung der Position manuell erfolgen soll.

Ob eine Anpassung der Position der Kamera 7 erforderlich ist, lässt sich anhand einer Bildanalyse bestimmen, die mittels einer in der Speichereinheit 22 der Steuereinheit 16 hinterlegten Bildanalysesoftware durch die Recheneinheit 21 durchgeführt werden kann. Werden beispielsweise bei der Analyse des von der Kamera 7 aufgenommenen Bildes keine Nutzpflanzen 3 erkannt, kann dies ein Anzeichen dafür sein, dass der Wuchs der Nutzpflanzen 3 zu gering ist, um bei der eingestellten Position, hier insbesondere der Höhe, der Kamera 7 erfasst zu werden. Daraufhin kann eine andere, niedrigere einzustellende Position der Kamera 7 vorgeschlagen werden oder automatisch eingestellt werden.

Hat die Bildanalyse beispielsweise zum Ergebnis, dass die Nutzpflanzen 3 von großem Wuchs sind, die aktuelle Position bzw. Höhe der Kamera 7 jedoch niedriger ist als eine baulich bedingt mögliche Position, so kann die Höhenposition der Kamera 7 automatisch vergrößert werden oder es kann ein entsprechender Hinweis ausgegeben werden. Im letzteren Beispiel lassen sich mehr Pflanzenreihen 5 erfassen, wodurch die Genauigkeit der Erfassung erhöhen lässt.

Die Bestimmung der Position der Kamera 7 erfolgt anhand des zuvor weiter oben beschriebenen Prozesses 30. Der Prozess 30 kann dabei durch den Bildanalysevorgang ausgelöst werden. Der Prozess 30 kann auch beim Befahren eines neuen Schlages initiiert werden. Ebenfalls denkbar ist es, wenn aufgrund einer Eingabe des Bedieners in die Eingabe-Ausgabe-Vorrichtung 19 ein Fruchtartwechsel detektiert werden kann, was daraufhin zum Auslösen des Prozesses 30 führen kann.

**Bezugszeichenliste**

| | | | |
|---|---|---|---|
| 1 | Arbeitsmaschine | S1-S11 | Schritt |
| 2 | Arbeitsaggregat | | |
| 3 | Nutzpflanze | | |
| 4 | Boden | | |
| 5 | Pflanzenreihe | | |
| 6 | Kamerasystem | | |
| 7 | Kamera | | |
| 8a | Kameraobjektiv | | |
| 8b | Kameraobjektiv | | |
| 9 | Mittenabschnitt | | |
| 10a | Blickachse | | |
| 10b | Blickachse | | |
| 11a | Optisches Zentrum | | |
| 11b | Optisches Zentrum | | |
| 12 | Blickrichtung | | |
| 13 | Basislinie | | |
| 14 | Ebene der Basislinie | | |
| 15 | Ebene | | |
| 16 | Steuereinheit | | |
| 17 | Anbauvorrichtung | | |
| 18 | Ausleger | | |
| 19 | Eingabe-Ausgabe-Vorrichtung | | |
| 20 | Befestigungselement | | |
| 21 | Recheneinheit | | |
| 22 | Steuereinheit | | |
| 23 | Mathematischer Raum | | |
| 24 | Ausgleichsebene | | |
| 25 | Bodenebene | | |
| 26 | Nicht-Ausreißer | | |
| 27 | Ausreißer | | |
| 28 | Linearaktor | | |
| 30 | Prozess | | |

## Patentansprüche

1. System zur Bestimmung der Position zumindest einer Kamera (7) einer Kameraanordnung (6) bezüglich einer Bodenebene (25), umfassend eine landwirtschaftlichen Arbeitsmaschine (1) und ein landwirtschaftliches Arbeitsaggregat (2), wobei die zumindest eine Kamera (7) an der landwirtschaftlichen Arbeitsmaschine (1) oder dem landwirtschaftlichen Arbeitsaggregat (2) angeordnet ist, wobei das Arbeitsaggregat (2) als Anbaugerät der Arbeitsmaschine (1) zur Bearbeitung eines Feldbestands ausgeführt ist, wobei die Kameraanordnung (6) konfiguriert ist, mittels der zumindest einen Kamera (7) Informationen über den Feldbestand zu generieren, **dadurch gekennzeichnet, dass** die Kameraanordnung (6) dazu eingerichtet ist, mittels eines Sensors (7) Sensordaten einer Oberfläche bereitzustellen, die Sensordaten mittels einer Recheneinheit (21) zur Bestimmung der Bodenebene (25) auszuwerten und anhand der ausgewerteten Sensordaten die durch Höhe und/oder Winkel der Kamera (7) bestimmte aktuelle Position in Bezug auf die Bodenebene (25) zu bestimmen,
wobei die Höhe der Kamera (7) durch einen Linearaktor (28) verstellbar ist,
wobei die Recheneinheit (21) dazu eingerichtet ist, den Linearaktor (28) zur Änderung der Position der Kamera (7) in Abhängigkeit von der in Bezug auf die Bodenebene (25) bestimmten Höhe anzusteuern,
wobei die Recheneinheit (21) dazu eingerichtet ist, in Abhängigkeit von dem in Bezug auf die Bodenebene (25) bestimmten Winkel eine Winkeländerung vorzuschlagen,
wobei ein Aktor vorgesehen ist, der automatisch ein Schwenken der Kamera bewirkt, um den Winkel der Kamera aufgrund der bestimmten Winkeländerung anzupassen.

2. System nach Anspruch 1, **dadurch gekennzeichnet, dass** der Sensor die zumindest eine Kamera (7) ist.

3. System nach Anspruch 1 oder 2, **dadurch gekennzeichnet, dass** die zumindest eine Kamera (7) eine 3D-Kamera ist.

4. System nach einem der Ansprüche 1 bis 3, **dadurch gekennzeichnet, dass** die Recheneinheit (21) dazu eingerichtet ist, eine Korrelation der bereitgestellten Sensordaten des Sensors (7), die eine Punktwolke bilden, mit einer die Bodenebene (25) abbildenden Ausgleichsebene (24) zu bestimmen.

5. System nach einem der vorangehenden Ansprüche, **dadurch gekennzeichnet, dass** die Kameraanordnung (6) dazu eingerichtet ist, Farbinformationen und/oder Strukturinformationen zu generieren, um zwischen pflanzlichem Bewuchs (3) und dem Boden (4) zu unterscheiden.

6. System nach Anspruch 5, **dadurch gekennzeichnet, dass** die Kameraanordnung (7) dazu eingerichtet ist, die Sensordaten auszufiltern, welche aufgrund von Farbinformationen und/oder Strukturinformationen als pflanzlicher Bewuchs (3) oder andere Objekte bestimmt werden.

7. System nach einem der vorangehenden Ansprüche, **dadurch gekennzeichnet, dass** der Sensor ein Ultraschallsensor oder ein Lidar-Sensor ist.

8. System nach einem der vorangehenden Ansprüche, **dadurch gekennzeichnet, dass** die Recheneinheit (21) dazu eingerichtet ist, in Abhängigkeit von der in Bezug auf die Bodenebene (25) bestimmten Höhe einen Sollwert für eine einzustellende Höhe der Kamera (7) vorzuschlagen.

9. System nach einem der vorangehenden Ansprüche, **dadurch gekennzeichnet, dass** die Recheneinheit (21) dazu eingerichtet ist, Abweichungen der eingestellten Position der Kamera (7) von einer optimalen Position zur Generierung der Informationen über den Feldbestand zu signalisieren.

10. System nach einem der vorangehenden Ansprüche, **dadurch gekennzeichnet, dass** die Recheneinheit (21) dazu eingerichtet ist, die Ausführung eines Schätzalgorithmus die Position der Kamera (7) in Bezug auf die Bodenebene (25) zu bestimmen.

11. Verfahren zur Bestimmung der Position zumindest einer Kamera (7) einer Kameraanordnung (6) mit einem System nach einem der vorangehenden Ansprüche bezüglich einer Bodenebene (25), die an einem landwirtschaftlichen Arbeitsaggregat (2) angeordnet ist, mit dem ein Feldbestand bearbeitet wird, wobei das Arbeitsaggregat (2) als Anbaugerät der Arbeitsmaschine (1) ausgeführt ist, wobei mittels der zumindest einen Kamera (7) Informationen über den Feldbestand generiert werden, **dadurch gekennzeichnet, dass** durch die Kameraanordnung (6) mittels eines Sensors (7) Sensordaten einer Oberfläche bereitgestellt werden, dass die Sensordaten mittels einer Recheneinheit (21) zur Bestimmung der Bodenebene (25) ausgewertet werden, und dass anhand der ausgewerteten Sensordaten die durch Höhe und Winkel der Kamera (7) bestimmte aktuelle Position in Bezug auf die Bodenebene (25) bestimmt werden.

## Claims

1. A system for determining the position of at least one camera (7) of a camera assembly (6) with respect to a ground plane (25), comprising an agricultural working machine (1) and an agricultural working unit (2), wherein the at least one camera (7) is disposed on the agricultural working machine (1) or on the agricultural working unit (2), wherein the working unit (2) is constructed as an attachment of the working machine (1) for processing a field crop, wherein the camera assembly (6) is configured to generate information regarding the field crop by means of the at least one camera (7), **characterized in that** the camera assembly (6) is configured to provide sensor data for a surface by means of a sensor (7), to analyse the sensor data by means of a computing unit (21) in order to determine the ground plane (25) and, with the aid of the analysed sensor data, to determine the current position with respect to the ground plane (25) specified by the height and/or angle of the camera (7),
wherein the height of the camera (7) can be adjusted by a linear actuator (28),
wherein the computing unit (21) is configured to actuate the linear actuator (28) in order to vary the position of the camera (7) as a function of the determined height with respect to the ground plane (25),
wherein the computing unit (21) is configured to propose a variation in angle as a function of the angle determined with respect to the ground plane (25),
wherein an actuator is provided which automatically causes a pivoting of the camera in order to adapt the angle of the camera on the basis of the determined variation in angle.

2. The system according to claim 1, **characterized in that** the sensor is the at least one camera (7).

3. The system according to claim 1 or claim 2, **characterized in that** the at least one camera (7) is a 3D camera.

4. The system according to one of claims 1 to 3, **characterized in that** the computing unit (21) is configured to determine a correlation of the sensor data which have been provided from the sensor (7), the data forming a point cloud, with a correction plane (24) forming the ground plane (25).

5. The system according to one of the preceding claims, **characterized in that** the camera assembly (6) is configured to generate colour information and/or structural information in order to distinguish between growing plants (3) and the ground (4).

6. The system according to claim 5, **characterized in that** the camera assembly (7) is configured to filter out the sensor data which are determined to be growing plants (3) or other objects on the basis of colour information and/or structural information.

7. The system according to one of the preceding claims, **characterized in that** the sensor is an ultrasonic sensor or a lidar sensor.

8. The system according to one of the preceding claims, **characterized in that** the computing unit (21) is configured, as a function of the determined height with respect to the ground plane (25), to propose a nominal value for a height of the camera (7) which is to be set.

9. The system according to one of the preceding claims, **characterized in that** the computing unit (21) is configured to indicate deviations of the set position of the camera (7) from a position which is optimal for generating the information regarding the field crop.

10. The system according to one of the preceding claims, **characterized in that** the computing unit (21) is configured to determine the position of the camera (7) with respect to the ground plane (25) by executing an estimation algorithm.

11. A method for determining the position of at least one camera (7) of a camera assembly (6) with respect to a ground plane (25) with a system according to one of the preceding claims, the camera being disposed on an agricultural working unit (2) with which a field crop is processed, wherein the working unit (2) is constructed as an attachment of the working machine (1), wherein information regarding the field crop is generated by means of the at least one camera (7), **characterized in that** sensor data for a surface is provided by the camera assembly (6) by means of a sensor (7), **in that** the sensor data is analysed by means of a computing unit (21) in order to determine the ground plane (25), and **in that** with the aid of the analysed sensor data, the current position with respect to the ground plane (25) specified by the height and angle of the camera (7) is determined with the aid of the analysed sensor data.

## Revendications

1. Système de détermination de la position d'au moins une caméra (7) d'un dispositif de caméra (6) par rapport à un niveau du sol (25), comprenant une machine de travail agricole (1) et un équipement de travail agricole (2), la caméra (7), au nombre d'au moins une, étant disposée sur la machine agricole (1) et ou l'équipement de travail agricole (2), l'équipement de travail (2) étant réalisé sous forme d'outil attelé de la machine (1) en vue du traitement de la culture d'un champ, le dispositif de caméra (6) étant configuré pour générer des informations concernant la culture du champ, à l'aide de la caméra (7), au nombre d'au moins une, **caractérisé en ce que** le dispositif de caméra (6) est conçu pour fournir des données de capteur d'une surface, à l'aide d'un capteur (7), aux fins d'évaluer les données de capteur à l'aide d'une unité de calcul (21), en vue de déterminer le niveau du sol (25), et pour déterminer, sur la base des données de capteur évaluées, la position actuelle par rapport au niveau du sol (25), définie par la hauteur et/ou l'angle de la caméra (7),
la hauteur de la caméra (7) pouvant être modifiée par un actionneur linéaire (28),
l'unité de calcul (21) étant conçue pour activer l'actionneur linéaire (28) en vue de modifier la position de la caméra (7) en fonction de la hauteur déterminée par rapport au niveau du sol (25),
l'unité de calcul (21) étant conçue pour proposer une modification de l'angle, en fonction de l'angle déterminé par rapport au niveau du sol (25),
sachant qu'il est prévu un actionneur qui provoque automatiquement un pivotement de la caméra pour adapter l'angle de la caméra suite à la modification de l'angle définie.

2. Système selon la revendication 1, **caractérisé en ce que** le capteur est la caméra (7), au nombre d'au moins une.

3. Système selon la revendication 1 ou 2, **caractérisé en ce que** la caméra (7), au nombre d'au moins une, est une caméra 3D.

4. Système selon une des revendications 1 à 3, **caractérisé en ce que** l'unité de calcul (21) est conçue pour créer une corrélation des données de capteur, qui sont fournies par le capteur (7) et forment un nuage de points, avec un niveau de compensation (24) représentant le niveau du sol (25).

5. Système selon une des revendications précédentes, **caractérisé en ce que** le dispositif de caméra (6) est conçu pour générer des informations de couleur et/ou des informations de structure, afin de distinguer entre la végétation (3) et le sol (4).

6. Système selon la revendication 5, **caractérisé en ce que** le dispositif de caméra (7) est conçu pour extraire par filtrage les données de capteur qui, sur la base d'informations de couleur et/ou d'informations de structure, sont déterminées comme étant de la végétation (3) ou d'autres objets.

7. Système selon une des revendications précédentes, **caractérisé en ce que** le capteur est un capteur à ultrasons ou un capteur Lidar.

8. Système selon une des revendications précédentes, **caractérisé en ce que** l'unité de calcul (21) est conçue pour proposer une valeur de consigne pour une hauteur à régler de la caméra (7), en fonction de la hauteur déterminée par rapport au niveau du sol (25).

9. Système selon une des revendications précédentes, **caractérisé en ce que** l'unité de calcul (21) est conçue pour signaler des écarts de la position réglée de la caméra (7) par rapport à une position optimale pour la génération des informations concernant la culture du champ.

10. Système selon une des revendications précédentes, **caractérisé en ce que** l'unité de calcul (21) est conçue pour déterminer l'exécution d'un algorithme d'estimation la position de la caméra (7) par rapport au niveau du sol (25).

11. Procédé de détermination de la position d'au moins une caméra (7) d'un dispositif de caméra (6) avec un système selon une des revendications précédentes, par rapport à un niveau du sol (25), qui est disposée sur un équipement de travail agricole (2) servant à traiter la culture d'un champ, l'équipement de travail (2) étant réalisé sous forme d'outil attelé de la machine (1), la caméra (7), au nombre d'au moins une, permettant de générer des informations sur la culture du champ, **caractérisé en ce que** le dispositif de caméra (6) fournit des données de capteur d'une surface, à l'aide d'un capteur (7), **en ce que** les données de capteur sont évaluées à l'aide d'une unité de calcul (21) aux fins de déterminer le niveau du sol (25), et **en ce que** les données de capteur évaluées permettent de déterminer la position actuelle, définie par la hauteur et l'angle de la caméra (7), par rapport au niveau du sol (25).
